(19) Europäisches Patentamt
European Patent Office
Office européen des brevets

(11) Numéro de publication: **0 474 988 A1**

(12) **DEMANDE DE BREVET EUROPEEN**

(21) Numéro de dépôt: **91110215.0**

(51) Int. Cl.$^{5}$: **A23L 1/226**, A23L 1/235

(22) Date de dépôt: **21.06.91**

(30) Priorité: **20.07.90 CH 2408/90**

(43) Date de publication de la demande:
**18.03.92 Bulletin 92/12**

(84) Etats contractants désignés:
**CH DE ES FR GB IT LI NL**

(71) Demandeur: **FIRMENICH SA**
**1, route des Jeunes**
**CH-1211 Genève 8(CH)**

(72) Inventeur: **Flament, Ivon**
**6, chemin du Fief-de-Chapitre**
**CH-1213 Petit-Lancy(CH)**

(74) Mandataire: **Salvadori, Giuseppe, Dr.**
**c/o Firmenich S.A. Case Postale 239**
**CH-1211 Genève 8(CH)**

(54) **Composition aromatisante et aliments la contenant.**

(57) Les composés aromatisants méthoxylés de formule

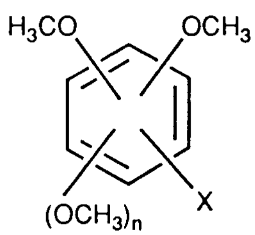

(I)

dans laquelle le symbole X représente un atome d'hydrogène, un radical méthyle ou $OCH_3$ lorsque l'indice n vaut zéro, ou il représente un radical méthyle lorsque n vaut 1, possèdent des propriétés organoleptiques intéressantes et peuvent servir notamment à titre d'ingrédients renforçateurs ou modificateurs de l'arôme et du goût dans des compositions ou aliments ayant le caractère aromatique de la truffe noire.

EP 0 474 988 A1

La présente invention a trait au domaine des arômes, plus particulièrement elle concerne l'utilisation, à titre d'ingrédients aromatisants, de certains dérivés aromatiques méthoxylés de formule

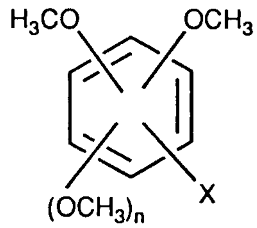

(I)

dans laquelle le symbole X représente un atome d'hydrogène, un radical méthyle ou $OCH_3$ lorsque l'indice n vaut zéro, ou il représente un radical méthyle lorsque n vaut 1.

Nous avons en effet découvert que lesdits dérivés aromatiques méthoxylés possédaient des propriétés aromatisantes particulières notamment dans la reconstitution de l'arôme de truffe noire.

La truffe noire ("Tuber melanosporum") est un champignon particulier à croissance souterraine qui pousse en symbiose avec certains arbres, le chêne notamment. Elle se développe dans la région méditerranéenne, en France, Italie et Espagne surtout où elle fait l'objet d'un intérêt marqué à cause de ses qualités aromatisantes exceptionnelles.

Sa disponibilité est toutefois réduite et les efforts consentis pour en augmenter la production ont échoué, d'où son prix de marché très élevé. Dès lors, il n'est pas étonnant de constater que nombreuses ont été les études entreprises en vue d'en réaliser le remplacement, tout au moins dans certaines applications culinaires. Particulièrement représentatives sont les études conduites par T. Talou et al. ainsi que par K. H. Ney et W. G. Freytag. Ces équipes se sont en effet attelées à l'analyse de la truffe noire dans sa variété de Tuber brumale et Tuber melanosporum.

Dans une publication parue dans Gordian 80, 214 (1980), Ney et Freytag décrivent les résultats d'une telle analyse et rapportent la présence de plusieurs alcools aliphatiques et aralyphatiques ainsi que du sulfure de diméthyle, de l'isoamylamine et du p- et m-crésol.

Plus récemment, T. Talou et al. ont publié une série d'articles faisant état d'une analyse chromatographique de l'espace de tête dynamique ("head-space"), analyse qui leur a permis d'identifier une quarantaine de constituants de l'arôme volatile de truffe noire du Périgord. Ces travaux, parus dans plusieurs revues scientifiques et présentés lors de conférences diverses [voir par exemple J. Agr. Food. Chem. 35, 774 (1987); Parfums, Cosmétiques, Arômes 82, 61 (1988); Agro-Industries 40, 43 (1988); J. Sci. Food Agric. 48, 57 (1989); Perfum. & Flavor 14, 9 (1989); 19th International Symposium on Essential Oils and Other Natural Substrates, Zürich (Suisse), 7-10 septembre (1988)] constituent par ailleurs l'objet d'une demande de brevet européen publiée sous le n° 257 666 [déposée le 16.06.87; priorité FR 86 10871 du 24.07.86]. Il est intéressant de souligner que cette demande de brevet décrit un procédé de fabrication d'un produit aromatique à odeur et goût de truffe noire, lequel procédé est caractérisé en ce qu'il consiste à associer deux composés : le diméthylsulfure et le 2-méthylbutanal. A titre facultatif, on y décrit également l'addition supplémentaires d'autres constituants : le propanal, l'anisole, l'acétone, le n-propanol, le butanol et l'éthanol.

Le mélange décrit est censé conférer, au dire des auteurs, un produit aromatique possédant une remarquable fidélité dans la reproduction des caractéristiques organoleptiques de l'arôme de truffe noire. Cette découverte est par ailleurs à la base d'un produit commercialisé, produit constitué pour l'essentiel de 14 constituants incorporés à de l'huile de tournesol ou autre support approprié [Agro-Industries 40, 43-(1988)].

A l'expérience, il est apparu qu'un tel produit, pas plus que les produits issus des reconstitutions réalisées grâce à l'emploi des composés mis en lumière lors des analyses effectuées précédemment, ne pouvait à lui seul remplacer l'emploi de la truffe véritable; tout au plus, il pouvait servir de modeste succédané dans des applications particulières et limitées. Son emploi comme renforçateur de goût était tout aussi décevant.

Nos analyses et essais multiples avaient mis en évidence et confirmé le fait qu'il était illusoire de vouloir reconstituer l'arôme et le goût propre de la truffe noire par le mélange de quelques éléments aromatisants limités en nombre. Il s'agit en effet d'un arôme fort complexe que l'on doit associer forcément à une multitude de constituants actifs.

Dans ce contexte, la présente invention apporte une solution nouvelle, quoique partielle, au problème posé par la reconstitution de l'arôme de truffe noire.

Nous avons en effet trouvé de manière fortuite que l'emploi de certains dérivés aromatiques méthoxylés obéissant à la formule (I) pouvait précisément servir à renforcer et améliorer considérablement le caractère gustatif très particulier de la truffe noire.

Il s'agit d'éthers phénoliques comportant deux fonctions au moins méthoxylées, le cas échéant substitués dans le noyau aromatique par un radical méthyle. De tels composés sont des dérivés de structure connue, certain d'entre eux ayant par ailleurs été identifiés dans le passé dans différentes sources naturelles. En considération de cela, il peut paraître étonnant que leur utilisation à titre de renforçateur de l'arôme de truffe noire soit passée jusqu'ici inaperçue, compte tenu notamment de l'intérêt présenté par un tel arôme et des nombreuses investigations récentes rapportées dans l'art antérieur.

A titre de composés préférentiels selon l'invention, il convient de citer les dérivés de formule (I) suivants :

1. 1,2-diméthoxy-benzène
2. 3,5-diméthoxy-toluène
3. 1,4-diméthoxy-benzène
4. 2,3-diméthoxy-toluène
5. 2,5-diméthoxy-toluène
6. 3,4-diméthoxy-toluène
7. 2,6-diméthoxy-toluène
8. 1,2,3-triméthoxy-benzène
9. 1,2,4-triméthoxy-benzène, et
10. 3,4,5-triméthoxy-toluène.

Au regard de chacun des composés mentionnés, sera indiquée dans le tableau 1 suivant la référence à un document donnant la description d'un procédé pour sa préparation ainsi que ses caractères organoleptiques.

Tableau 1

| Composé | Conc. [ppm] | Evaluation (*) | Référence |
|---|---|---|---|
| 1. | 5 | Terreux, fruité, médicinal, vert, légume, noix | CA 112, 216422/15 |
| 2. | 10 | Vert, hydrocarboné, gras, brûlé, viandeux, transpiration, noix | CA 106, 35060/06 |
| 3. | 10 | Brûlé, doux, vanilline, noix, terreux, floral | Synthesis 597 (1983) |
| 4. | 5 | Floral, anisique, boisé, terreux, vert, légume | Tetrah. Lett. 23, 2199 (1982) |
| 5. | 1 | Terreux, moisi, champignon, boisé, doux, fruité, cerise, brûlé | DE-OS 25 47464<br>CA 87, 134523/17 |
| 6. | 15 | Lourd, animal, foin, terreux, brûlé, noix, légèrement moisi | CA 112, 178200/19 |
| 7. | 10 | Moisi, naphtalénique, résineux, amère | Tetrah. Lett. 30, 1689 (1989) |
| 8. | 10 | Terreux, bouchon, vert, noix, animal, doux, phénolique | CA 90, 137482/17 |
| 9. | 10 | Doux, terreux, moisi, légèrement musqué, gras | Synthesis 605 (1979) |
| 10. | 1 | Boisé, crémeux, légèrement caramel, terreux, brûlé | CA 95, 132491/15 |

(*) L'évaluation a été effectuée par un panel d'experts sur des solutions du produit à l'examen dans de l'eau de source dans les concentrations indiquées

L'invention est illustrée à l'aide de l'exemple d'application suivant.

Exemple

Deux produits alimentaires du marché ont été sélectionnés : d'une part, un pâté de foie contenant 3% de truffe noire du Périgord (A) et, d'autre part, un pâté de foie ne contenant pas de truffe (B).

Leur goût respectif a été évalué comme étant caractérisé par une note aromatisante de type

A : brûlé, caramel, animal, terreux, fumé, floral

B : viandeux, gras, animal, typiquement foie cuit.

On a ensuite ajouté à des quantités identiques de la base B les composés indiqués ci-après dans les concentrations définies. Le goût et l'arôme des échantillons aromatisés ainsi obtenus ont été décrits comme suit par un panel d'experts aromaticiens par comparaison avec la base A.

Tableau 2

| Composé | Conc. [ppm] | Evaluation |
|---|---|---|
| 1. | 2 | Fumé, viandeux, jambon, vert, gras, animal. Caractère typique de A. |
| 2. | 5 | Champignon, doux, viandeux, légèrement terreux, moisi. Caractère typique de A. |
| 3. | 5 | Doux, anisique, vanillique/phénolique. Quelques caractères typiques de A. |
| 4. | 2,5 | Moins animal que A ; doux, gras, terreux, caramel. |
| 5. | 1 | Viandeux, légèrement rôti, terreux, doux, fruité. Caractère typique de A. |
| 6. | 7 | Terreux, champignon, vert, fumé. Quelques caractères typique de A. |

| Composé | Conc. [ppm] | Evaluation |
|---|---|---|
| (suite) | | |
| 7. | 5 | Doux, fruité, gras, caramel, terreux. Caractère typique de A. |
| 8. | 3 | Viandeux, terreux, animal, doux, caramel, brûlé. Caractère typique de A. |
| 9. | 5 | Viandeux, sang, doux, caramel, gras, légèrement terreux. Caractère de type animal de A. |
| 10. | 5 | Viandeux, boisé, fruité, fumé, phénolique, champignon. Quelques caractères typiques de A. |

**Revendications**

1. Utilisation, à titre d'ingrédients aromatisants, de composés aromatiques polyméthoxylés de formule

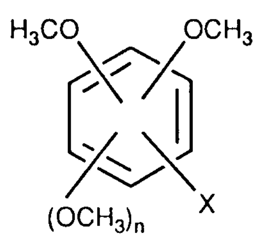

(I)

dans laquelle le symbole X représente un atome d'hydrogène, un radical méthyle ou $OCH_3$ lorsque l'indice n vaut zéro, ou il représente un radical méthyle lorsque n vaut 1.

2. Utilisation de composés aromatiques polyméthoxylés de formule (I), telle qu'indiquée à la revendication 1, à titre d'ingrédients renforçateurs ou modificateurs de l'arôme et du goût dans des compositions de type truffe noire.

3. Composition aromatisante destinée à conférer, améliorer ou renforcer les caractères organoleptiques d'aliments à l'arôme de type truffe noire, caractérisée en ce qu'elle contient à titre d'ingrédient aromatique actif au moins l'un des composés de formule (I) telle qu'indiquée à la revendication 1.

4. Aliment contenant à titre d'ingrédient aromatique actif une composition selon la revendication 3.

5. Produit comestible à odeur et goût de truffe noire caractérisé en ce qu'il contient à titre de produit aromatique actif un des composés de formule (I) telle qu'indiquée à la revendication 1.

Office européen des brevets

# RAPPORT DE RECHERCHE EUROPEENNE

Numero de la demande

EP 91 11 0215

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | T.E.FURIA ET AL. 'fenaroli's handbook of flavor ingredients'<br>1971 , THE CHEMICAL RUBBER CO. ,<br>CLEVELAND,OHIO,U.S.A.<br>pages 364,365,539,540.<br>*page 364 :m-dimethoxybenzene*<br>*page 365:p-dimethoxybenzene*<br>--- | 1-5 | A23L1/226<br>A23L1/235 |
| X | S.ARCTANDER 'perfume and flavor chemicals'<br>1969 , S.ARCTANDER , MONTCLAIR,N.J.,U.S.A.<br>*1689:homocatechol dimethyl ether;2441:orcinol dimethylether;2796:resorcinol dimethylether;2953:toluhydroquinone dimethylether;3078:veratrol*<br>--- | 1-5 | |
| A | WORLD PATENTS INDEX<br>Section Ch, Week 8031,<br>Derwent Publications Ltd., London, GB;<br>Class D, AN 805466C<br>& RD-A-195025 (ANONYMOUS) 11 juillet 1980<br>* abrégé *<br>----- | 1 | |

| DOMAINES TECHNIQUES RECHERCHES (Int. Cl.5 ) |
|---|
| A23L |

Le présent rapport a été établi pour toutes les revendications

| Lieu de la recherche | Date d'achèvement de la recherche | Examinateur |
|---|---|---|
| LA HAYE | 20 DECEMBRE 1991 | VAN MOER A.M.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................................................................
& : membre de la même famille, document correspondant

EPO FORM 1503 03.82 (P0402)